(19) Europäisches Patentamt
European Patent Office
Office européen des brevets

(11) EP 4 060 011 A1

# (12) EUROPEAN PATENT APPLICATION

(43) Date of publication:
**21.09.2022 Bulletin 2022/38**

(21) Application number: **21162961.3**

(22) Date of filing: **16.03.2021**

(51) International Patent Classification (IPC):
***C11D 7/26*** *(2006.01)*     ***C11D 11/00*** *(2006.01)*
***B08B 7/00*** *(2006.01)*     ***B29C 33/72*** *(2006.01)*

(52) Cooperative Patent Classification (CPC):
**C11D 11/0041; B08B 7/0028; B29C 33/722;
C11D 7/265**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **surfactor Germany GmbH
45141 Essen (DE)**

(72) Inventors:
• **SILVENTOINEN, Ilpo
82430 Puhos (FI)**
• **IKONEN, Kai
82430 Puhos (FI)**

(74) Representative: **König Szynka Tilmann von
Renesse
Patentanwälte Partnerschaft mbB Düsseldorf
Mönchenwerther Straße 11
40545 Düsseldorf (DE)**

## (54) METHOD FOR CLEANING PRESS PLATES

(57)     The present invention relates to a novel and improved method for cleaning press plates of residues during a pressing process comprising softening the residues and removing the residues simultaneously, preferably in one step. Further the invention provides an element for cleaning press plates, preferably by simultaneously softening and removing the residues, especially resin residues, and a method of manufacturing said cleaning element.

EP 4 060 011 A1

**Description**

**FIELD OF THE INVENTION**

The present invention relates to a novel and improved method of cleaning press plates and to an element for cleaning press plates (cleaning element). The invention in particular relates to a process for cleaning press plates for the manufacture of products, especially wood products with surfaces comprising resin impregnated papers.

**BACKGROUND OF THE INVENTION**

Resin impregnated papers ("films") have been used for decades for the furnishing of surfaces in the wood working industry. For preparation of laminated wood products (e.g. plywood), typically a resin impregnated substrate (mostly paper, especially kraft paper) is attached to a wooden carrier under heat and pressure. Thereby a firm bonding between the board and the impregnated paper is established. Such laminated wood products are widely used for various industrial purposes such as concrete shuttering, flooring, construction material and in the furniture or automotive industry.

In the production process of such laminated materials press plates are used. These typically consist of or at least comprise metals or metal alloys. During the pressing process residues of the impregnated paper, in particular resin residues (cured or uncured), remain on the surface of the press plates. These residues disturb the surface quality of the resulting laminated products. This in particular applies after various pressing cycles have been conducted. A further disadvantage is that such residues can complicate the complete removal of the laminated material from the press plates. Therefore it is necessary to clean the press plates regularly.

The process of cleaning pressing plates is a time-consuming and elaborate procedure. It can be done mechanically by removing the residues (dirt and/or resin) from the previous pressing processes e.g. by scraping or grinding. However, this is not only time consuming, but can result in a substantial damage of the surface of the press plates, which in turn jeopardizes the quality of the laminated surfaces.

In EP 1 080 798 A2 a device with a pressure head with two nozzles is used to remove resin residues from press plates by a water jet. In another example, EP 3 083 086 A1 used a laser beam to burn the residues from the press plates.

One further method of the state of the art is to remove the residues by cleaning the press plates with resin softening chemicals for example appropriate solvents. This is not only laborious, since it may require the demounting of the press plates. Additionally, suitable agents for chemical cleaning are often harmful to health or to the environment.

A further known method for cleaning press plates works with so called "cleaning films". This method typically uses a two step process of first softening or resolving the residues on the press plates by pressing a cleaning film onto the press plates, typically together with a panel and a separate glue film which bonds the cleaning film onto the panel. In a second step, a surface film and the panel is pressed for removing the softened or dissolved residues with the cleaning film from the plates. Both steps can and often must be repeated to achieve a sufficient cleaning effect of the press plates. Each step and each cleaning process need several different films and further materials like panels. This consequently generates a lot of non-reusable material and waste.

DE 27 32 064 A1 discloses such a cleaning film for the removal of cured phenolic resin residues from press plates or moulds as well as methods for applying it. The cleaning film is a paper soaked with a mixture of a non-ionic wetting agent and a high content of N-Methylpyrrolidon (NMP) and optionally dimethyl sulfoxide (DMSO) and a release agent. Both solvents, NMP and DMSO, are known for good dissolving properties, especially for resins and varnishes. In a second step a phenoplast impregnated paper is pressed together with a wood panel in order to remove the residues dissolved by the cleaning film.

The handlings known in the state of the art are complex and/or require at least more than one or two different steps, which mean long breaks in production processes and additional costs for the needed materials as well as for the press downtimes. Hence, there is a need for an improved process for cleaning press plates, which overcomes at least one of the above-mentioned disadvantages or drawbacks. Moreover self-bonding cleaning elements are desirable.

**SUMMARY OF THE INVENTION**

According to the invention, the objective is solved by providing a method according to claim 1, an element for cleaning press plates according to claim 14, a process of cleaning press plates according to claim 16 as well as a composition which is used in a process of cleaning press plates according to claim 17.

Advantageous further developments are the subject of the dependent claims or further independent claims.

According to the invention the residues on the press plates are softened and removed simultaneously, i.e. within the same process step. This is advantageous since only one single pressing step is required in order to achieve a substantial improvement of the surface quality. Furthermore, the cleaning of the press plates can be performed *in situ,* i.e. the press plates do not have to be dismounted or disassembled from the press. This saves time and labour, since e.g. the cleaning process can be performed easily in between two regular pressing cycles during normal production process.

It has been found by the inventors that this cleaning method can be enabled by the cleaning element of the invention. This cleaning element is a carrier material which comprises at least one acid (e.g. organic acid or mineral acid or a mixture thereof) and a resin and/or at least one compound with least one hydroxy group (-OH). It was particular surprising that such a composition for impregnation (also abbreviated to "the composition") is chemically sufficiently stable and can exhibit the double function of first softening the resin residues and then removing them. Furthermore, it can bonds by itself and at the same time to a used wood article used during a cleaning process by pressing, especially by hot pressing, without a need of a separate glue film and/or an additional step.

Without being bound by theory, the inventors assume that the acid within the composition can soften the resin residues for example due to dissolving at least some of the bonds within the resin residues (either cured or uncured, or both). Additionally the acid works as a kind of glue. The softened or dissolved residues then can be chemically and/or physically bound by the hydroxy groups of the at least one compound with least one hydroxy group (-OH) and/or by the resin within the composition of the cleaning element. This allows the removal of the residues from the press plates. Thereby it is possible to achieve both events simultaneously in one process step only, as well as using the self-bonding ability of the cleaning element e.g. to a wood article.

As already pointed out, the inventors surprisingly found, that a composition comprising an acid, preferably an organic acid, and at least one compound with at least one hydroxyl group and/or a resin is chemically stable. It can be used to impregnate a carrier material, preferably a paper and therewith provide a cleaning element according to the invention. For the manufacturing of the cleaning element, preferably, first the composition comprising at least one compound with at least one hydroxy group and/or the resin is provided, and then the acid is added, preferably in portions.

It is preferred that the composition contains at least 15 weight-%, preferably at least 25 weight-%, more preferred at least 40 weight-%, most preferred more than 45 weight-% to a maximum of 75 weight-% acid, all based on the total weight of the composition.

Moreover, the cleaning element and accordingly the method of the invention are safe and convenient for the health and the environment.

## DETAILED DESCRIPTION OF THE INVENTION

"Press plate(s)" is/are any metallic plate(s) or plate(s) comprising metal(s) used in presses to press material with an applied pressure that is higher than atmospheric pressure and preferably at a temperature of at least 25 °C, more preferably at a temperature of at least 35 °C. Preferably the press plate(s) according to the invention is/are that/those, which is/are used in the production of laminated and/or impregnated materials or in any other production of materials where resin residues are left behind after the pressing process(es). The term "press plate(s)" according to the invention also comprises press plate(s) used in continuous presses - that/those type(s) of press plate(s) is/are also known as "press belt(s)".

"Softening" of the residues means in context of the invention a change in viscosity of the residues. The change in viscosity is preferably a lowering of the viscosity of the residues. For example, softening can occur due to temperatures of at least 25 °C, preferably due to temperatures of at least 35 °C and any pressure applied that is higher than atmospheric pressure and/or even due to the direct contact with the cleaning element according to the invention or a mixture thereof. According to invention, the term "softening" also includes the process of dissolving and the process of decomposition.

"Residues" according to the invention are any left overs on the surface of the press plates after one or more uses thereof, for example by pressing process(es), preferably resin(s) (cured or uncured or both).

"Curing" is a chemical process, that produces the toughening or hardening of a polymer material by reaction e.g. cross-linking of the polymer-chains and/or by the removal (e.g. due to evaporation) of solvents. The uncured material, initially liquid or high viscous, will be at the end of the process solid or semisolid (cured material): viscosity is the most important property that changes (viscosity increases) during the process of curing.

An organic acid is any organic compound with acidic properties. Preferred organic acids according to the invention are the carboxylic acids, whose acidity is associated with their carboxyl group -COOH.

In one embodiment, the organic acid is selected from the group comprising citric acid, tartaric acid, lactic acid, acetic acid, formic acid, oxalic acid, uric acid, malic acid or a mixture thereof, preferably citric acid, tartaric acid or a mixture thereof. More preferred the group consists of citric acid, tartaric acid or a mixtures thereof. In a most preferred embodiment of the invention the organic acid is citric acid.

If at least one mineral acid is used in combination with an organic acid or alone, the mineral acids are preferably selected from the group consisting of hydrochloric acid, nitric acid, phosphoric acid, sulphuric acid, boric acid or a mixture thereof.

Further preferred acids are those with a solids content between 10 and 100 weight-% by weight, more preferred with a solids content between 50 and 100 weight-% by weight, further more preferred with a solids content between 70 and 100 weight-% by weight, further more preferred with a solids content greater or equal to (≥) 95 weight-% by weight and most preferred with a solids content of 100 weight-% by weight.

"Solids content" describes the amount of solids, i.e. substances and/or ingredients of a composition in a solid state, of said substance or composition.

The term "solid" always, unless other indicated, refers to the aggregate state of the correspondingly named substance or composition by means of standard conditions, namely at a pressure $p$ = 1 atm = 1013.25 mbar and at a temperature $T$ = 25 °C = 298 K.

The same applies to other aggregate states.

According to a preferred embodiment of the invention the composition comprises at least 15 weight-%, preferably at least 25 weight-% acid, more preferred at least 40 weight-% acid, most preferred more than 45 weight-% to a maximum of 75 weight-% acid, all based on the total weight of the composition.

The cleaning element according to the method comprises a carrier material, preferably a paper, impregnated with a composition comprising at least one acid, preferably an organic acid or mineral acid or a mixture thereof, more preferred an organic acid.

A "carrier material" as used in the present invention is any material than can be impregnated with the composition.

"Impregnated" means when a material at least partially absorbs or is penetrated by a liquid, a suspension or a dispersion. Synonymously, "impregnated" also covers soaked, saturated or coated. It is preferred, that a carrier material according to the invention is impregnated, when at least 20 % of its material, especially its surface, more preferred at least 40 %, most preferred at least 60 % is in contact with the composition.

The composition favorably at least partly penetrates into the carrier material. Hence, the carrier material is preferably at least partly saturated with the composition.

According to the invention the carrier material can be impregnated with the composition on one side or on both sides, preferably on both sides.

The carrier material may generally be selected from the group consisting of paper, in particular kraft paper or sack paper, card board, glass fiber, textiles including woven and non-woven fabrics, plastics including rigid foam and foam plastic, mineral material such as ceramics or cellular concrete, metal such as metal foils.

As used herein the term "paper" is defined as a layered material mainly constituted of fibers, which can be natural or synthetic, preferably derived from plants, in particular wood or grasses, or textiles. The paper preferably is kraft paper.

In a preferred embodiment of the invention the carrier material is having a weight per square meter of 20 to 100 gsm, preferably 30 to 90 gsm, most preferably 40 to 80 gsm. Preferably this carrier material is a kraft paper.

In one embodiment the composition further comprises at least one compound with at least one hydroxy group (-OH).

The compound with at least one hydroxy group is in one preferred embodiment an alcohol, preferably a polyalcohol (polyol), preferably selected from the group consisting of glycerol, sorbitol, mannitol, erythritol, threitol, arabitol, xylitol, ribitol, galactitol, fucitol, iditol, inositol, volemitol, isomalt, maltitol, lactitol, maltotritol, maltotetraitol, polyglycitol or mixtures thereof, more preferably glycerol, sorbitol, xylitol or mixtures thereof, most preferred is glycerol.

In a preferred method the composition comprises the acid and the compound with at least one hydroxy group in a weight ratio of 6:1 to 1:1, preferably at 2:1.

In another embodiment the composition comprises a resin. The composition can comprise the resin additional to the compound with at least one hydroxy group or without the compound with at least one hydroxy group, preferably without the compound with at least one hydroxy group.

"Resin" is a solid and/or highly viscous substance of plant or synthetic origin that is typically convertible into polymers. The term can be used not only for prepolymers of thermosets (uncured), but also for cured thermosets (e.g. epoxy resins, phenolic resins, polyester resins, alkyd resins, polycarbonate resins, polyamide resins, polyurethane resins, silicone resins, polyethylene resins, acrylic resins, polystyrene resins, polypropylene resins, etc.).

The resin therefore is obtainable by providing a composition comprising at least two of the following components: melamine, urea, phenol and formaldehyde.

The term "melamine" as used in the context of the present invention is defined as a class of compounds consisting of melamine and optionally substituted melamine. Melamine is (2,4,6-triamino-1,3,5-triazine) is a heterocyclic aromatic compound having the formula ($C_3H_6N_6$). "Optionally substituted melamine" means substituted, partially substituted or unsubstituted melamine. Examples for substituted and partially substituted melamine are 2,4,6-trialkylamino-1,3,5-triazine, 2,4,6-trialkenylamino-1,3,5-triazine, 2,4,6-triarylamino-1,3,5-triazine 2,4-dialkylamino-6-amino-1,3,5-triazine or 2,4-diamino-6-alkenylamino-1,3,5-triazine.

The term "phenol" as used in the present invention is defined as a class of compounds consisting of phenol and optionally substituted phenol. Phenol is an aromatic organic compound with the molecular formula $C_6H_5OH$ and comprises at least one hydroxyl group (-OH) bonded directly to an aromatic hydrocarbon group. "Optionally substituted phenol" means substituted, partially substituted or unsubstituted phenol. Suitable substituted or partially substituted phenols are for example alkylphenol, alkenylphenol, arylphenol or heteroarylphenol.

"Urea" is defined as a class of compounds consisting of urea having the chemical formula $CO(NH_2)_2$ and optionally substituted urea. "Optionally substituted urea" means substituted, partially substituted or unsubstituted amino groups in the urea. The urea can be substituted with alkyl, alkenyl, aryl or heteroaryl groups.

Alternatively, the resin is obtainable by mixing, and optionally reacting, at least following compounds: at least one aromatic alcohol, at least one aldehydic compound containing at least two carbon atoms per molecule and at least one (meth)acrylic polymer.

The resin can also be a mixture of more than one resin.

The resin comprises in a preferred embodiment a phenol-formaldehyde (PF)-resin, preferably is a phenol-formaldehyde (PF)-resin.

In one embodiment the phenol-formaldehyde (PF)-resin has a molar ratio of formaldehyde to phenol which is greater than (>) 1. These resins are also known as resoles. According to the invention a molar ratio of formaldehyde to phenol (F/P-ration) is preferably in the range of 1:0.99 to 3:1, preferably in the range of 1.2:1 to 2:1, more preferred in the range of 1.3.1 to 2.2 :1, further more preferred in the range of 1.4:1 to 1.7:1 and most preferred at 1.6:1 (= 1.6).

In an alternative embodiment the phenol-formaldehyde (PF)-resin has a of formaldehyde to phenol which is smaller than (<) 1. These resins are also known as novolacs. According to the invention a molar ratio of formaldehyde to phenol is preferably in the range of 0.99:1 to 1:3, preferably in the range of 1:1.2 to 1:2, more preferred in the range of 1:1.4 to 1:1.7.

In the case a novolacs is used as or in the resin, in a molar ratio of formaldehyde to phenol which is smaller than (<) 1, a catalyst is added to the resin.

If a resin is used in the composition for impregnating (also shortened to "the composition") the carrier material which is to provide a cleaning element according to the invention, resoles as defined above are preferred.

Further preferred resins are those with a solids content between 10 and 100 weight-% by weight, preferred with a solids content between 40 and 90 weight-% by weight, more preferred with a solids content between 50 and 65 weight-% by weight and most preferred with a solids content of 60 weight-% by weight.

When working with high amounts of acid, preferably high amounts of citric acid, which means higher than 45 weight-% according to the total weight of the composition for impregnation, the most preferred resins are those which are phenol-formaldehyde (PF)-resins having a molar ratio of formaldehyde to phenol of 1.6 (e.g. "S-258", a resole resin with a F/P ration of 1.6).

All types of resins can be mixed with various amounts of acid, preferably of citric acid. If the amount of acid, preferably of citric acid is less than 15 weight-% according to the total weight of composition for impregnation, the cleaning process with the resulting cleaning element becomes less effective.

The amount of acid, preferably of citric acid, has to be determined in that the resin-acid mixture in the composition for impregnation is still suitable for impregnation. This is always dependent of the used type of resin - a still suitable composition for impregnation has a solids content of approximately 75% weight-% by weight.

In general, various resin types, preferably various (PF)-resin types accept various amounts of acid, preferably of citric acid. For particularly good cleaning efficiency in the cleaning process of press plates, the highest possible amount of acid, especially citric acid should be used and which is still acceptable for the corresponding resin, preferably for the corresponding (PF)-resin to form a stable composition for the impregnation of the carrier material.

Preferably, the composition comprises acid and resin in a weight ratio of 2:1 to 1:10. This ratio is especially preferred, when the solids content of the acid, preferably of citric acid is at least 50 weight-% by weight. More preferred is a solids content of an acid, preferably citric acid of at least 85 weight-% by weight and a resin, preferably a (PF)-resin with at least 40 weight-% solids content in said ratios. Most preferred is a ratio of 1:1 for an acid, preferably citric acid with a solids content of at least 95 weight-% by weight and a resin, preferably (PF)-resin with at least 40 weight-% by weight solids content.

Preferred weight ratios of citric acid with a solids content greater above or equal to ($\geq$) 95 weight % by weight, especially with citric acid with a solids content of 100 weight-% by weight and a (PF)-resin, preferably a resole resin, more preferably a resole resin with a with a 60 weight-% by weight solids content are in the range of 1.5:1 to 1:5. Further preferred are weight ratios in the range of 1.2:1 to 1:3. More further preferred are molar ratios in the range of 1:0.8 to 1:1.5. The most preferred weight ratio of said components is 1:1.

Tab. 1 - Overview of preferred ranges for components of the composition

| | Preferred range | More preferred range | Most preferred range or value |
|---|---|---|---|
| Resin solids content, weight-% by weight | 40 - 90 | 50 - 65 | 60 |
| Resin's molar ratio (F/P) | 1:0.99 - 3:1 | 1.3.1 - 2.2 :1 | 1.6:1 |

(continued)

|  | Preferred range | More preferred range | Most preferred range or value |
|---|---|---|---|
| Acid solids content, weight-% by weight | 50 - 100 | 70 - 100 | 100 |
| Mixture weight ratio, acid : resin (s:l) | 1.5:1 - 1:5 | 1.2:1 - 1:3 | 1:1 |

The skilled person in the art is aware of the fact, that the composition should have suitable viscosity and stability for impregnation purposes. That a viscosity and/or stability of a composition is not suitable according to the invention, can be seen by simple testing the composition for impregnation as such - the used molar ratios and weight ratios of the components as well as the components themselves are influencing the compositions' stability and ability to impregnate a carrier material as described above.

The cleaning element according to the invention can further contain additives if desired. The additives are preferably added to the composition. Appropriate additives can be selected from the group consisting of wax emulsion, surfactant, softener, hardener, wetting agent, anti-foam agent, diluent or mixtures thereof.

The composition for impregnating the carrier material preferably has a total solids content of at least 20 weight-%, more preferably of at least 35 weight-%, further preferred of at least 50 weight-% and most preferred of at least 70 weight-%, all based on the total weight of the composition. The solid content of the composition has its origin either from the used acid(s), from the used resin(s), from the further ingredients such as additives or from mixtures thereof.

According to a preferred embodiment of the method, the cleaning element according to any one of the embodiments is pressed by hot pressing of for at least 5 minutes, preferably for 10 minutes, most preferred for 15 minutes and maximum for 30 minutes.

The term "hot pressing" describes a process of applying pressure that is higher than atmospheric pressure, preferably above or equal to ($\geq$) 1 bar, more preferably above or equal to ($\geq$) 2 bar uniaxially at temperatures above or equal to ($\geq$) 25 °C, preferably above or equal to ($\geq$) 50 °C, more preferably above or equal to ($\geq$) 80 °C at a material to be processed.

Further preferred is an embodiment of the method, wherein the hot pressing of the cleaning element is done with at least 1 bar, preferably with at least at 2 bar, more preferred with at least 5 bar and maximum at 25 bar and most preferred at 10 bar.

One embodiment of the method is hot pressing of the cleaning element with at least 50 °C, preferably with at least at 80 °C, more preferred with at least 100 °C and maximum at least 250 °C and most preferred at a temperature between 100 and 150 °C.

Most preferred is an embodiment of the method, wherein the hot pressing of the cleaning element is done with at least 5 bar and maximum at 25 bar and most preferred at a temperature between 100 and 150 °C.

The composition comprised in the cleaning element according to the invention can be defined as a composition comprising preferably at least 3 % by weight of residual volatiles, especially when containing a resin and/or a layer of an alkaline resin.

The skilled person is aware of and able to select suitable methods and standard tests for determining the content of residual volatiles such as solvents including organic solvents and water. For example, residual volatiles can be measured by keeping the cleaning element in an oven for 5 min. at 160 °C and determining the amount of volatiles are reflected by the weight loss of the element due to this treatment. A test for determination of residual volatiles is given in detail in example 3 below.

In a preferred embodiment of the invention the total content of residual volatiles in the composition is at least 5 % by weight and, most preferably, at least 7 % by weight.

Preferably the total content of residual volatiles in the cleaning element is lower than 20 % by weight, more preferably lower than 15 % by weight, most preferably lower than 12 % by weight. In a most preferred embodiment the total content of residual volatiles is between 3% and 15 % by weight, in particular between 5 % and 13 % by weight.

According to one embodiment of the invention the cleaning element has a weight between 25 and 650 g/m$^2$, preferably between 40 and 500 g/m$^2$.

A cleaning element according to the invention is provided herein. It can be described and characterized as described above.

The cleaning element according to the invention comprises in an embodiment a carrier material, which is preferably paper, and a composition comprising either a resin and/or at least one compound with at least one hydroxy group. In a preferred embodiment, the cleaning element is a carrier material, preferably paper, which is impregnated with the composition as defined above.

A cleaning element cleaning for press plates (abbreviated to "element for cleaning") according to one embodiment comprises a carrier material, which is a paper, preferably a kraft paper and a composition comprising resin and an acid in a weight ratio in the range of 1:0.8 to 1:1.5, wherein the acid is citric acid with a solids content of greater than ($\geq$) 95 weight-% by weight and the resin is a resole with a solids content of 60 weight-% by weight, preferably with a F/P-ratio in the range of 1.4:1 to 1.7:1.

A cleaning element according to one further embodiment comprises a carrier material, which is a paper, preferably a kraft paper and a composition comprising at least one compound with at least one hydroxy group and an acid in a weight ratio in the range of 6:1 to 1:1, preferably at 2:1, wherein the acid is citric acid with a solids content of greater than 95 weight-% by weight and the at least one compound with at least one hydroxy group is glycerol, sorbitol or xylitol or a mixture thereof, preferably is glycerol.

In an alternative embodiment, a cleaning element as defined above comprises a layer of an alkaline resin, preferably an alkaline phenolic resin. The layer is preferably only on one side of the cleaning element. In a preferred embodiment, the layer of an alkaline resin, preferably of an alkaline phenolic resin has a thickness of 5 to 60 g/m$^2$, preferably of 15 to 50 g/m$^2$, more preferably of 20 to 40 g/m$^2$.

The cleaning element according to the invention and the inventions method can be applied to a wood article. After being applied to the wood article, the cleaning element and the wood article can be pressed together with the press plates, preferably by hot pressing. Due to the self-bonding ability of the cleaning element of the invention, it bonds to the used wood article without any need of a separate glue film.

The cleaning element according to any one of the embodiments has a self-bonding ability to a surface, preferably to a wood article after a pressing process, preferably after hot pressing.

The terms "self-bonding" or "self-bonding ability" describes the ability of an entity, here of the cleaning element according to the invention, to bond to a surface by itself, especially to the surface of a wood article and without any separate glue film, either only due to fact that said cleaning element is brought into contact with said surface or due to fact that the cleaning element is further pressed to the surface, especially by hot pressing.

A "wood article" according to the invention is an article comprising wood based materials. Preferably a wood article can be any wood based boards (abbr. to boards), wood based veneers (abbr. to veneers) and wood based panels (abbr. to panels). The wood based materials includes wood, plywood, chipboard, fibre board, oriented strand board (OSB), glue wood, laminated veneer lumber (LVL), parallel strand lumber (PSL), oriented strand lumber (OSL), 3-layer boards or the like.

The wood based panel, preferably, is selected from the group consisting of wood, plywood, chipboard, blockboard, fibre board, oriented strand board (OSB), glue wood, laminated veneer lumber (LVL), parallel strand lumber (PSL), oriented strand lumber (OSL), 3-layer boards, preferably plywood or blockboard.

Preferred types of wood according to the invention are spruce, larch, oak, acacia, birch, douglas fir, southern yellow pine, meranti wood or mixtures thereof, more preferred spruce, birch, douglas fir, southern yellow pine, meranti wood or mixtures thereof, most preferably birch, spruce, douglas fir, southern yellow pine or a mixtures thereof, in particular plywood or blockboard from spruce, birch, douglas fir or meranti wood.

Accordingly, a method is provided wherein the cleaning element defined according to any one of the embodiments above is first placed onto a wood article, preferably a wood panel and then pressed by the press plates to be cleaned according to any one of the above embodiments.

Moreover a cleaning element is provided which is defined according to any of the embodiments above. It is reusable, preferably for at least two times. In a further aspect, the wood article used in the method of cleaning the press plates is reusable, preferably for at least two times. The re-use of the wood article can be realized either by using the wood article with the already used cleaning element once again or by placing a new cleaning element according to the invention onto the pre-used wood article and pre-used cleaning element bond to the wood article, especially without first removing the before used cleaning element(s).

In a further embodiment of the invention a method for manufacturing a cleaning element is provided. The cleaning element according to any one of the embodiments can be manufactured by a method comprising the following steps:

a) providing a composition comprising a resin and/or
b) providing a composition comprising at least one compound with at least one hydroxy group,
c) adding at least one acid to the composition of a) or b) or to a mixture thereof
d) impregnating the carrier material with the composition of c), and
e) optionally adding a layer of an alkaline resin, preferably a layer of an alkaline phenolic resin, more preferably a layer of an alkaline phenolic resin only on one side of the cleaning element.

Another embodiment of the invention provides a process of cleaning press plates of residues, comprising the following steps:

a) providing a cleaning element according to any one of the proceeding embodiments or manufactured according to the embodiment mentioned above,
b) optionally applying the cleaning element to a wood article according to any one of the proceeding embodiments,
c) hot pressing the cleaning element according any one of the methods as defined above,
d) optionally repeating step b) and/or step c).

The process of cleaning press plates of residues preferably uses the cleaning element according to the invention which is the only film (or element), such as an impregnated carrier material used during cleaning.

In an other embodiment a composition is provided which comprises at least 25 weight-%, preferred more than 45 weight-% to a maximum of 75 weight-% of an acid, preferably of an organic acid, more preferably of citric acid, all based on the total weight of the composition for the impregnation of a carrier material, preferably a paper which is used in a process of cleaning press plates.

The composition for the impregnation of a carrier material which is used in a process of cleaning press plates can be further defined according to any of the embodiments of the composition used in any one of the methods according to the invention.

**Figures**

**Fig. 1** - (1.1 concept: acid + resin) - left: one layer of the cleaning element according to the invention laminated (via its self-bonding ability) by hot pressing onto a panel (here: douglas fir); right: a second layer of the cleaning element laminated (via its self-bonding ability) by hot pressing onto the previous layer of cleaning element remained on the panel after use.

**Fig. 2** - (1.3 concept: asymmetric cleaning element of 1.1.2) - a second layer of the cleaning element laminated (via its self-bonding ability) by hot pressing onto the previous layer of cleaning element remained on the panel after use.

**Fig. 3** - cleaning element bonded to a panel - shown after two cycles of cleaning press plates by hot pressing.

**Fig. 4** - Press plate before hot pressing the cleaning element according to the invention (Example 1; 1.1 concept: acid + resin); mat surface, spots and stripes.

**Fig. 5** - Press plate after hot pressing for 15 minutes at 5 bar and 133 °C of the cleaning element according to the invention (Example 1; 1.1 concept: acid + resin); shiny and smooth surface.

**Fig. 6** - Press plate (right) and cleaning element on a panel (left) after hot pressing for 15 minutes at 5 bar and 133 °C of the cleaning element according to the invention (Example 1; 1.1 concept: acid + resin); shiny and smooth surface in the middle of the metal surface of the press plate - For comparison: the edges, where the cleaning element was not present during hot pressing, the resinous dirt remained.

**Fig. 7** - three panels (wood articles) with each a cleaning element self-bonded on the panel surface, after cleaning process by hot pressing with the collected dirt.

**Preferred embodiments**

1. A method for cleaning press plates of residues during a pressing process comprising softening the residues and removing the residues, **characterized in that** softening of the residues and removing them is carried out simultaneously, preferably in one pressing step.

2. The method according to embodiment 1, **characterized in that** softening and removing of the residues is achieved by using a single cleaning element.

3. The method according to embodiment 2, **characterized in that** the cleaning element is applied to a wood article before pressing.

4. The method according to embodiment 1 to 3, **characterized in that** no separate and/or additional adhesive element is used.

5. The method according to embodiment 1 to 4, **characterized in that** softening and removing of the residues is achieved by pressing, preferably by hot pressing.

6. The method according to any one of the embodiments 2 to 5, **characterized in that** the residues, after softening, are chemically and/or physically bond to the cleaning element.

7. The method according to any one of the embodiments 3 to 6, **characterized in that** the cleaning element is chemically and/or physically bond to the wood article after pressing.

8. The method according to any of the preceding embodiments 2 to 7, **characterized in that** the cleaning element comprises a carrier material, preferably a paper, impregnated with a composition comprising at least one acid, preferably an organic acid or mineral acid or a mixture thereof, more preferably an organic acid.

9. The method according to embodiment 8, **characterized in that** the composition comprises at least 15 weight-% acid, preferably at least 25 weight-% acid, more preferred at least 40 weight-% acid, most preferred more than 45 weight-% to a maximum of 75 weight-% acid, all based on the total weight of the composition.

10. The method according to embodiment 8 or 9, **characterized in that** the organic acid is citric acid, tartaric acid or a mixture thereof, preferably citric acid.

11. The method according to embodiment 8 or 9, **characterized in that** the mineral acid is hydrochloric acid, nitric acid, phosphoric acid, sulphuric acid, boric acid or a mixture thereof.

12. The method according to any of the embodiments 8 to 11, **characterized in that** the composition has a solids content of at least 20 weight-%, more preferably of at least 35 weight-%, further preferred of at least 50 weight-% and most preferred of at least 70 weight-%.

13. The method according to any of the embodiments 8 to 12, **characterized in that** the composition further comprises at least one compound with at least one hydroxy group.

14. The method according to embodiment 13, **characterized in that** the composition comprises the acid and at least one compound with at least one hydroxy group in a weight ratio of 6:1 to 1:1.

15. The method according to embodiment 13 or 14, **characterized in that** the compound with at least one hydroxy group is an alcohol, preferably a polyalcohol, preferably selected from the group consisting of glycerol, sorbitol, mannitol, erythritol, threitol, arabitol, xylitol, ribitol, galactitol, fucitol, iditol, inositol, volemitol, isomalt, maltitol, lactitol, maltotritol, maltotetraitol, polyglycitol or mixtures thereof, more preferably glycerol, sorbitol, xylitol or mixtures thereof.

16. The method according to any of the preceding embodiments 8 to 15, **characterized in that** the composition comprises a resin.

17. The method according to embodiment 16, **characterized in that** the composition comprises the acid and the resin in a weight ratio of 2:1 to 1:10.

18. The method according to embodiment 16 or 17, **characterized in that** the resin comprises a phenol-formaldehyde (PF)-resin, preferably is a phenol-formaldehyde (PF)-resin.

19. The method according to embodiment 18, **characterized in that** the phenol-formaldehyde (PF)-resin has a molar ratio of formaldehyde to phenol is in the range of 1 : 0.99 to 3 : 1, preferably in the range of 1.2 : 1 to 2 : 1, more preferred in the range of 1.4 : 1 to 1.7 : 1.

20. The method according to embodiment 19, **characterized in that** the phenol-formaldehyde (PF)-resin has a molar ratio of formaldehyde to phenol is in the range of 0.99 : 1 to 1 : 3, preferably in the range of 1 : 1.2 to 1 : 2, more preferred in the range of 1 : 1.4 to 1 : 1.7.

21. The method according to any of the preceding embodiments 2 to 20, **characterized in that** the cleaning element comprises a layer of an alkaline resin, preferably an alkaline phenolic resin.

22. The method according to embodiment 20, **characterized in that** the layer has a thickness of 5 to 60 g/m², preferably of 15 to 50 g/m², more preferably of 20 to 40 g/m².

23. The method according to any of the preceding embodiments 2 to 22, **characterized by** hot pressing of the cleaning element for at least 5 minutes, preferably for 10 minutes, most preferred for 15 minutes and maximum for 30 minutes.

24. The method according to any of the preceding embodiments 2 to 23, **characterized by** hot pressing of the cleaning element with at least 1 bar, preferably with at least at 2 bar, most preferred with at least 5 bar and maximum at 25 bar.

25. The method according to any of the preceding embodiments 2 to 24, **characterized by** hot pressing of the cleaning element with at least 50 °C, preferably with at least at 80 °C, more preferred with at least 100 °C and maximum at least 250 °C and most preferred at a temperature between 100 and 150 °C.

26. The method according to any of the preceding embodiments 3 to 26, **characterized in that** the wood article is a wood based board, wood based veneer or wood based panel, wherein the wood base is selected from the group consisting of wood, plywood, blockboard, chipboard, fiber board, oriented strand board (OSB), glue wood, laminated veneer lumber (LVL), parallel strand lumber (PSL), oriented strand lumber (OSL) or 3-layer board.

27. The method according to embodiment 25 or 26, **characterized in that** the wood article is reusable, preferably reusable for at least two times.

28. An element for cleaning press plates of residues during pressing, **characterized in that** the element is defined according to any of the preceding embodiments 2 to 27.

29. The element for cleaning press plates according to embodiment 28, **characterized in that** it comprises a carrier material, which is a paper, preferably a kraft paper and a composition comprising a resole resin with a F/P-ratio in the range of 1.4:1 to 1.7:1 and citric acid in a weight ratio in the range of 1:0.8 to 1:1.5.

30. The element for cleaning press plates according to embodiment 28, **characterized in that** it comprises a carrier material, which is a paper, preferably a kraft paper and a composition comprising at least one compound with at least one hydroxy group selected from the group consisting of glycerol, sorbitol or xylitol or a mixture thereof, preferably is glycerol and citric acid in a weight ratio in the range of 6:1 to 1:1, preferably at 2:1.

31. The element for cleaning press plates according to embodiment 29 or 30, **characterized in that** it further comprises a layer of an alkaline resin, preferably an alkaline phenolic resin.

32. The element for cleaning press plates according to embodiment 31, **characterized in that** only on one side of the cleaning element comprises the alkaline resin.

33. The element for cleaning press plates according to embodiment 31 or 32, **characterized in that** the layer of has a thickness of 5 to 60 g/m², preferably of 15 to 50 g/m², more preferably of 20 to 40 g/m².

34. The element according to any one of the embodiments 28 to 33, **characterized in that** the cleaning element has a weight between 25 and 650 g/m², preferably between 40 and 500 g/m².

35. A method of manufacturing a cleaning element according to the embodiments 28 to 34, comprising the following steps:

    a) providing a composition comprising a resin and/or
    b) providing a composition comprising at least one compound with at least one hydroxy group,
    c) adding at least one acid to the composition of a) or b) or a mixture thereof
    d) impregnating the carrier material with the composition of c), and
    e) optionally adding a layer of an alkaline resin according any one of the embodiments 31 to 33.

36. A process of cleaning press plates of residues, comprising the following steps:

a) providing a cleaning element according to any of the embodiments 28 to 34 or manufactured according to embodiment 35,
b) optionally applying the cleaning element to a wood article according to any of the embodiments 26 or 27,
c) hot pressing the cleaning element according to the method defined in any of the embodiments 23 to 25,
d) optionally repeating step b) and/or step c).

37. The process of embodiment 36, **characterized in that** the cleaning element is the only impregnated carrier material used during cleaning.

38. A composition comprising at least 25 weight-%, preferred more than 45 weight-% to a maximum of 75 weight-% of an acid, preferably of an organic acid, all based on the total weight of the composition for the impregnation of a carrier material, preferably a paper which is used in a process of cleaning press plates.

39. The composition according to embodiment 38, **characterized in that** the composition further comprises a resin, preferably a (PF)-resin or at least one compound with at least one hydroxy group.

## EXAMPLES

### Example 1

Preparation of the composition and further of the cleaning element according to the invention and proof of the effectiveness of cleaning of the method according to the invention

**1.1 Concept: acid + resin**

**1.1.1 Composition comprising at least one acid and a resin:**

| Raw material | Amount, parts per weight (all based on the total weight of the composition) |
| --- | --- |
| Resin S-258* (app. solids 58 %) | 100 |
| Water | 100 |
| Citric acid, Anhydrous (≥ 99 %) | 100 |
| Co-solvent, here: MeOH | 5 |
| *Resin S-258 is a standard resole resin (from surfactor) with a low F/P molar ratio of 1.6. | |

**1.1.2 Manufacturing the composition comprising at least one acid and a resin in a first and a second step, and afterward the cleaning element in a third step:**

a) In a first step a composition comprising a resole resin with a F/P ration of 1.6 (Resin S-258) is provided,
b) in a second step citric acid (≥ 99 %) is added to the composition of a),
c) in a third step, a carrier material, a 60 g/m$^2$ natural kraft paper is impregnated with the composition from step of b):
Resulting in a cleaning element according to the invention with a total weight of 140 g/m$^2$ and 10 % residual volatiles.

**1.2 Concept: acid + compound with at least one hydroxy group**

**1.2.1 Composition comprising at least one acid and at least one compound with at least one hydroxy group:**

| Raw material | Amount, parts per weight (all based on the total weight of the composition) |
|---|---|
| Glycerol | 50 |
| Water | 50 |
| Citric acid, Anhydrous (≥ 99 %) | 100 |
| Co-solvent, here: MeOH | 5 |

**1.2.2 Manufacturing the composition comprising at least one acid and at least one compound with at least one hydroxy group in a first and a second step, and afterward the cleaning element in a third step:**

a) In a first step a composition comprising glycerol is provided,
b) in a second step citric acid (≥ 99 %) is added to the composition of a),
c) in a third step, a carrier material, a 60 $g/m^2$ natural kraft paper is impregnated with the composition from step of b): Resulting in a cleaning element according to the invention with a total weight of app. 170 $g/m^2$ and 10 % residual volatiles.

**1.3 Concept: asymmetric cleaning element (with a layer of an alkaline resin)**

First manufacturing the cleaning element according to any one of both examples above (in 1.1.2 or 1.2.2) followed by a fourth step d) of adding a layer of an alkaline resin, preferably to only one side of the cleaning element: resulting in a cleaning element according to the invention with a layer of an alkaline resin on one side of the element which has a thickness in the range of 20 to 40 $g/m^2$ and a total weight of app. 170 $g/m^2$ and 10 % residual volatiles.
The alkaline layer is preferably an alkaline phenolic layer which is a resole resin with a solid content of 58% and an alkalinity of 2%. The alkaline phenolic resin layer can be applied with any suitable application method, e.g. spraying, extrusion coating, gravure roll coating, etc.

**Example 2**

Testing surface properties of the cleaning element according to the invention, the effectiveness of cleaning by the cleaning element and the reusability of the used wood article

**2.2 Objective**

The objective was to evaluate the cleaning elements according to the invention.

**2.3 Test setups**

The cleaning elements used in the following test setups were prepared as described in example 1.

**2.3.1 Setup 1 - Bonding properties / reusability**

In order to evaluate the surface properties of the cleaning elements, the respective cleaning element was laminated (bonded via its self-bonding ability) onto a panel (wood article) by hot pressing.
In order to evaluate the reusability of the used panels (wood articles) during the cleaning process (by hot pressing) with the cleaning elements according to the invention, the respective cleaning element was layed onto or wrapped around the wood article which was then layed onto the bottom press plate and then pressed by hot pressing for 15 minutes at 130-135 °C by the press plates to be cleaned. If necessary, the process of pressing the cleaning element was repeated. Afterwards the wood article was re-used by adding a new (layer of) cleaning element to it and starting a new cleaning process of press plates.

**2.3.2 Setup 2 - Effectiveness of cleaning**

In order to evaluate the effectiveness of cleaning of the cleaning elements, the respective cleaning element was laid onto or wrapped around the wood article which was then layed onto the bottom press plate and then pressed by hot pressing for 15 minutes at 130-135 °C by the press plates to be cleaned. If necessary, the process of pressing the cleaning element was repeated. The press used in the test is a 15-multidaylight, combi-press (Raute press, 2017)

**2.4 Results**

**2.4.1 Bonding properties / reusability**

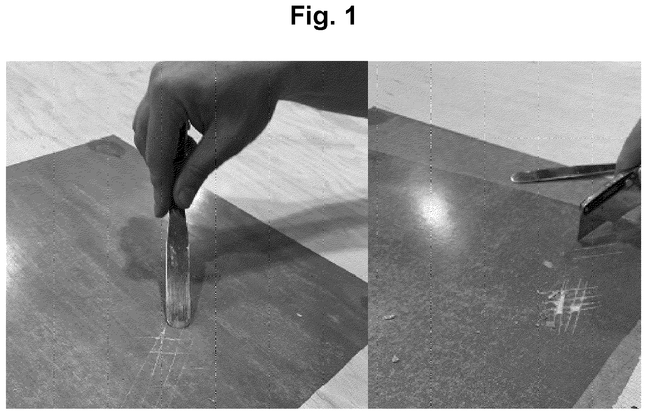

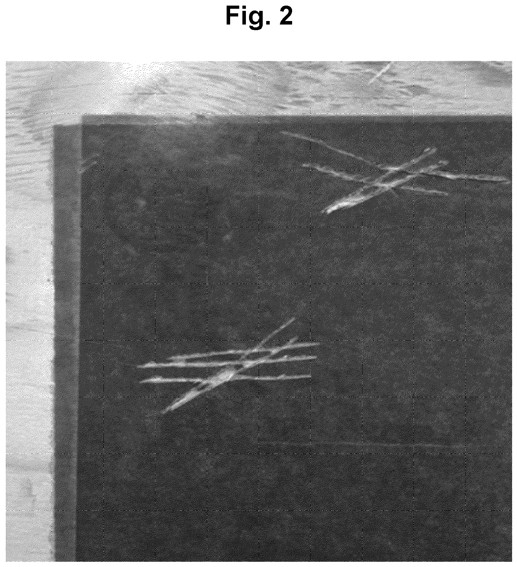

The advantageous bonding properties and reusability of the cleaning element itself as well as of the used panel (wood article) resulting from the cleaning element according to the invention are visible in Figure 1 (Example 1; 1.1 concept: acid + resin) and Figure 2 (Example 1; 1.3 concept: asymmetric cleaning element of 1.1.2) - it shows excellent bonding properties as well as cleaning properties. For testing the firm bonding to the panel, scratches are made by a sharp knife. In detail: on the left in Fig. 1, the cleaning element which is self-bonded on the panel surface by hot pressing is completely and firmly bonded to the wood (here: douglas fir). On the right in Fig. 1 as well as in Fig. 2, a further corresponding cleaning element is bonded on the cleaning element remaining on the panel surface from the hot pressing before. It also shows very good bonding properties to this pre-used surface and underlines the reusability of the panel (wood article), especially without any need of pretreatment, e.g. like removing the previous cleaning element or adding a separate glue film.

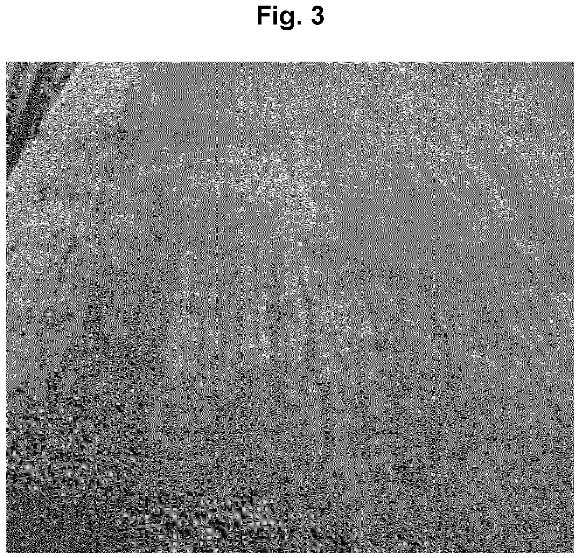

In Figure 2 and Figure 3 the reusability of a panel is demonstrated - Fig. 3 shows one layer of a cleaning element according to the invention after two cycles of cleaning press plates (after hot pressing with/onto a panel). The same used panel could be used multiple times, always depending on the degree of contamination ("dirtiness") and condition of the presses which should be cleaned. Moreover, the panels are further reusable by applying a fresh (layer) cleaning element. It could be confirmed, that for at least six cycles it is possible to re-use the panel.

**2.4.2 Effectiveness of cleaning**

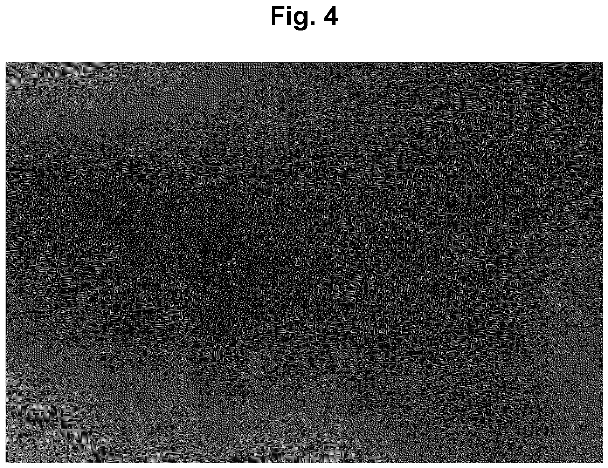

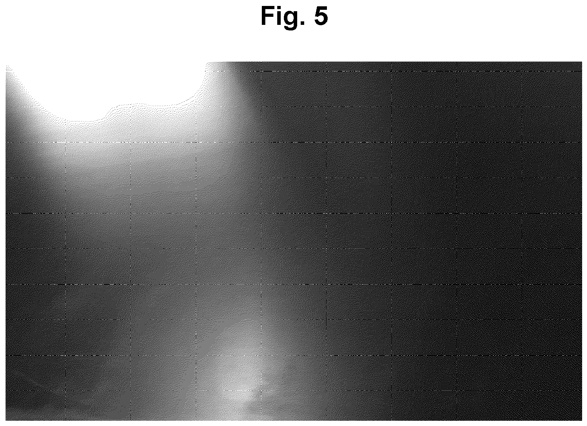

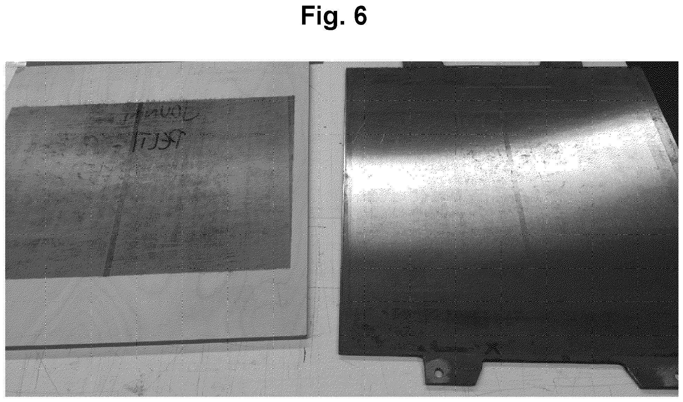

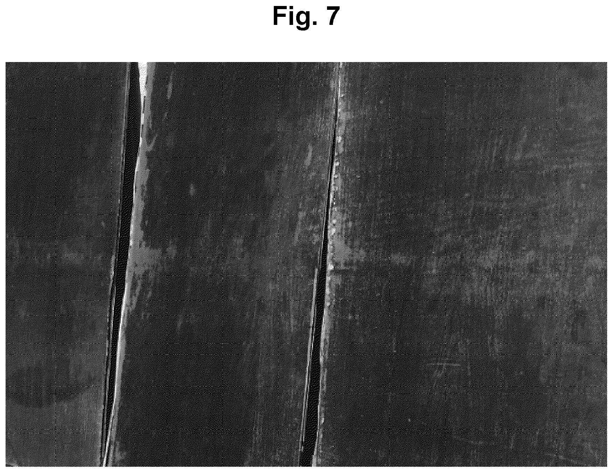

The effectiveness of cleaning can be clearly seen after using the cleaning element according to the invention of example 1. A previous mat and dirty surface (see Fig. 4 and edges of the pressing plate in Fig. 6) changed into a shiny and smooth surface (see Fig. 5 and the middle surface of the pressing plate in Fig. 6). Figure 7 displays panels (wood articles) with each a cleaning element according to the invention self-bonded on the panel surface during hot pressing between dirty press plates with the collected dirt (dark colored regions).

Overall it could be shown, that the cleaning elements according to the invention all show excellent self-bonding properties and a very good cleaning efficacy after the hot pressing of said cleaning elements (with a wood article).

**Example 3**

Determination of residual volatiles

**3.2 Objective**

The residual volatiles (also volatiles) of a cleaning element are determined under fixed drying conditions. The underlying test method can be elaborated following DIN EN ISO 287:2018-03.

**3.3 Test setup**

The cleaning element is cut to 20 x 25 cm. After the preparation of the sample the weight is determined immediately with a precision scale (max. 0.05 % tolerance). The initial weight is documented.

The prepared test sample is placed in a ventilated drying oven at 160 $\pm$ 2 °C for 5 minutes. After cooling to room temperature, its weight (end weight) is determined.

**3.4 Evaluation**

The volatiles content is determined with the following formula:

$$\text{Volatile content (\%)} = \text{(initial weight } - \text{ end weight) x 100 / initial weight.}$$

The average value is determined and documented as the residual volatiles content. Preferably a triple determination (of three samples of the same cleaning element) is a carried out.

**Claims**

1. A method for cleaning press plates of residues during a pressing process comprising softening the residues and removing the residues, **characterized in that** softening of the residues and removing them is carried out simultaneously, preferably in one pressing step.

2. The method according to claim 1, **characterized in that** softening and removing of the residues is achieved by using a single cleaning element.

3. The method according to claim 2, **characterized in that** the cleaning element is applied to a wood article before pressing.

4. The method according to any of the claims 1 to 3, **characterized in that** softening and removing of the residues is achieved by pressing, preferably by hot pressing.

5. The method according to any of the claims 2 to 4, **characterized in that** the cleaning element comprises a carrier material, preferably a paper, impregnated with a composition comprising at least one acid, preferably an organic acid or mineral acid or a mixture thereof, more preferably an organic acid.

6. The method according to claim 5, **characterized in that** the composition comprises at least 15 weight-% acid, preferably at least 25 weight-% acid, more preferred at least 40 weight-% acid, most preferred more than 45 weight-% to a maximum of 75 weight-% acid, all based on the total weight of the composition.

7. The method according to claim 5 or 6, **characterized in that** the organic acid is citric acid, tartaric acid or a mixture thereof, preferably citric acid.

8. The method according to any of the claims 5 to 7, **characterized in that** the composition further comprises at least one compound with at least one hydroxy group.

9. The method according to claim 8, **characterized in that** the compound with at least one hydroxy group is an alcohol, preferably a polyalcohol, preferably selected from the group consisting of glycerol, sorbitol, mannitol, erythritol, threitol, arabitol, xylitol, ribitol, galactitol, fucitol, iditol, inositol, volemitol, isomalt, maltitol, lactitol, maltotritol, maltotetraitol, polyglycitol or mixtures thereof, more preferably glycerol, sorbitol, xylitol or mixtures thereof.

10. The method according to any of the any of the claims 5 to 9, **characterized in that** the composition comprises a resin.

11. The method according to claim 10, **characterized in that** the composition comprises the acid and the resin in a weight ratio of 2:1 to 1:10.

12. The method according to claim 10 or 11, **characterized in that** the resin comprises a phenol-formaldehyde (PF)-resin, preferably is a phenol-formaldehyde (PF)-resin.

13. The method according to any of the claims 2 to 12, **characterized in that** the cleaning element comprises a layer of an alkaline resin, preferably an alkaline phenolic resin.

14. An element for cleaning press plates of residues during pressing, wherein the element is defined according to any of the preceding embodiments 2 to 13.

15. A method of manufacturing a cleaning element according to claim 14, comprising the following steps:

   a) providing a composition comprising a resin and/or
   b) providing a composition comprising at least one compound with at least one hydroxy group,
   c) adding at least one acid to the composition of a) or b) or a mixture thereof
   d) impregnating the carrier material with the composition of c), and
   e) optionally adding a layer of an alkaline resin, preferably an alkaline phenolic resin.

16. A process of cleaning press plates of residues, comprising the following steps:

   a) providing a cleaning element according to claim 14 or manufactured according to claim 15,
   b) optionally applying the cleaning element to a wood article,
   c) hot pressing the cleaning element,
   d) optionally repeating step b) and/or step c).

17. A composition comprising at least 25 weight-%, preferred more than 45 weight-% to a maximum of 75 weight-% of an acid, preferably of an organic acid, all based on the total weight of the composition for the impregnation of a carrier material, preferably a paper which is used in a process of cleaning press plates.

## Fig. 1

# Fig. 2

Fig. 3

# Fig. 4

## Fig. 5

Fig. 6

## Fig. 7

Europäisches
Patentamt

European
Patent Office

Office européen
des brevets

## EUROPEAN SEARCH REPORT

Application Number

EP 21 16 2961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | DE 39 11 661 A1 (WTZ HOLZVERARBEITENDE IND [DD]) 31 May 1990 (1990-05-31)<br>* column 1, lines 6-31 *<br>* column 2, lines 21-52 *<br>* examples *<br>* claims * | 1-5,7-16<br><br>6,17 | INV.<br>C11D7/26<br>C11D11/00<br>B08B7/00<br>B29C33/72 |
| X | US 2011/210280 A1 (JAFFRENNOU BORIS [FR]) 1 September 2011 (2011-09-01)<br>* examples; table 1 * | 17 | |
| X | US 2019/002804 A1 (ZOU YONG [US] ET AL) 3 January 2019 (2019-01-03)<br>* examples; table 1 * | 17 | |
| A,D | DE 27 32 064 A1 (GOLDSCHMIDT AG TH) 31 May 1979 (1979-05-31)<br>* page 5, paragraphs 2, 3 *<br>* page 7, paragraph 3 *<br>* examples *<br>* claims * | 1-17 | |
| | | | **TECHNICAL FIELDS SEARCHED (IPC)**<br><br>C11D<br>B08B<br>B29C |

The present search report has been drawn up for all claims

| Place of search | Date of completion of the search | Examiner |
|---|---|---|
| The Hague | 31 August 2021 | Bertran Nadal, Josep |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 2961

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2021

| Patent document cited in search report | | Publication date | Patent family member(s) | | Publication date |
|---|---|---|---|---|---|
| DE 3911661 | A1 | 31-05-1990 | DD | 277475 A1 | 04-04-1990 |
| | | | DE | 3911661 A1 | 31-05-1990 |
| US 2011210280 | A1 | 01-09-2011 | AU | 2009290744 A1 | 18-03-2010 |
| | | | BR | PI0918162 A2 | 01-12-2015 |
| | | | CA | 2736597 A1 | 18-03-2010 |
| | | | CL | 2011000525 A1 | 17-06-2011 |
| | | | CN | 102209764 A | 05-10-2011 |
| | | | CO | 6341646 A2 | 21-11-2011 |
| | | | DK | 2324089 T3 | 18-06-2018 |
| | | | EA | 201170431 A1 | 31-10-2011 |
| | | | EP | 2324089 A1 | 25-05-2011 |
| | | | EP | 3363774 A1 | 22-08-2018 |
| | | | ES | 2666743 T3 | 07-05-2018 |
| | | | FR | 2935707 A1 | 12-03-2010 |
| | | | HR | P20180923 T1 | 27-07-2018 |
| | | | JP | 5694166 B2 | 01-04-2015 |
| | | | JP | 2012502199 A | 26-01-2012 |
| | | | KR | 20110056512 A | 30-05-2011 |
| | | | NZ | 592169 A | 28-03-2013 |
| | | | PL | 2324089 T3 | 31-07-2018 |
| | | | SI | 2324089 T1 | 29-06-2018 |
| | | | UA | 102266 C2 | 25-06-2013 |
| | | | US | 2011210280 A1 | 01-09-2011 |
| | | | WO | 2010029266 A1 | 18-03-2010 |
| | | | ZA | 201102675 B | 28-12-2011 |
| US 2019002804 | A1 | 03-01-2019 | NONE | | |
| DE 2732064 | A1 | 31-05-1979 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1080798 A2
- EP 3083086 A1

- DE 2732064 A1